# EUROPEAN PATENT SPECIFICATION

(11) **EP 2 996 902 B1**
(45) Date of publication and mention of the grant of the patent: **15.03.2017**
(21) Application number: 14729981.2
(22) Date of filing: 16.05.2014
(51) Int. Cl.: B60R 1/06, B60R 1/072

(54) **MIRROR ADJUSTMENT UNIT AND EXTERIOR MIRROR FOR A MOTOR VEHICLE COMPRISING SUCH A MIRROR ADJUSTMENT UNIT**
SPIEGELEINSTELLUNGSEINHEIT UND AUSSENSPIEGEL FÜR EIN KRAFTFAHRZEUG MIT DERARTIGER SPIEGELEINSTELLUNGSEINHEIT
UNITÉ DE RÉGLAGE DE RÉTROVISEUR ET RÉTROVISEUR EXTÉRIEUR POUR UN VÉHICULE À MOTEUR COMPRENANT UNE TELLE UNITÉ DE RÉGLAGE DE RÉTROVISEUR

(30) Priority: 16.05.2013 NL 2010811
(43) Date of publication of application: 23.03.2016
(73) Proprietor: MCi (Mirror Controls International) Netherlands B.V., 3447 GK Woerden (NL)
(72) Inventor: BROUWER, Stefan Frits, NL-3447 GK Woerden (NL)
(74) Representative: V.O.
(86) International application number: PCT/NL2014/050313
(87) International publication number: WO 2014/185785

(56) References cited:
- DE-A1- 2 627 918
- US-A- 4 973 820
- US-A- 5 196 965
- US-A- 5 659 423
- US-A1- 2002 171 906

## Description

This invention generally relates to a mirror adjustment unit for an exterior mirror of a motor vehicle, comprising a base frame which can be fixedly connected with a motor vehicle, and a mirror support for supporting a mirror element, which mirror support is connected rotatably relative to the base frame via an adjusting mechanism, and wherein there is provided an electrical connection between the base frame and the mirror support.

Such a mirror adjustment unit is for instance known from Dutch patent NL-C-1019524 and is used to rotatably incorporate a mirror element in an exterior mirror of a motor vehicle, such that a driver can adjust the angular position of the mirror element relative to the vehicle to adjust his field of vision in rearward direction from the driver's seat via the mirror element. To that end, the mirror adjustment unit is provided with electrical driving means to enable the mirror element to be electrically rotated or pivoted, while the mirror support is often integrated with a mirror support plate. Also, the known mirror adjustment unit is provided with one or more so-called view assist devices which serve to realize additional functions for the purpose of the use of the mirror, such as, for instance, mirror heating, electric dimming of light shining in, and keeping the mirror water-free through vibrations. The electric components with which such functions are realized, for instance a heating element, an electrochrome glass or an ultrasonic motor, are arranged on the mirror support or mirror support plate. For activating or energizing these view assist devices the mirror adjustment unit according to NL-C-1019524 includes an electrical connection between the base frame and the mirror support, that comprises a pair of contact parts disposed movably relative to each other, which jointly form a sliding contact for maintaining the electrical contact during rotation of the mirror support relative to the base frame, while one of the contact parts of the sliding contact is fixedly connected with the mirror support and the other with the adjusting mechanism. The disadvantage of such a sliding contact, however, is that upon frequent rotation of the mirror support relative to the base frame, the sliding contact may wear out and the electrical connection thereby provided no longer functions correctly under all circumstances, in particular when the view assist devices are arranged on the mirror itself.

Further, there is a trend to realize more and more electrical functions for the purpose of the use of the mirror. Consequently, because of the extra wire outputs or connecting wires from the base frame to the onboard network of a vehicle that are needed for each electrical function, it is difficult in practice to provide for a sufficiently flexible electrical connection. In addition, it is time consuming not only to arrange a bundled electrical connection between the vehicle and the base frame but also to provide the electrical connections for each electrical function between the base frame and the mirror support, which may regularly give rise to connecting errors. Also, it appears that errors can be made in placing or replacing mirror elements which contain view assist devices. For the purpose of the supply of these devices, the mirror elements include upstanding pins which make the mirror elements with view assist devices high and fragile and, in particular, make such elements difficult to stack.

This is a problem in particular when it is taken into account that the mirror support is often supplied as a subassembly, the mirror support being provided with a mirror element and a number of electrical components for fulfilling utility functions of the mirror, such as a heating element, electrochrome glass or ultrasonic motor. Further, the subassembly mentioned is often supplied by a different supplier than the supplier of the other parts of the mirror adjustment unit, which likewise constitute a subassembly. Often, the two subassemblies of the mirror adjustment unit then have to be electrically connected with each other in a reliable manner in large numbers by a third party. As the two subassemblies of the mirror adjustment unit are each made up of a large number of components, this can entail an accumulation of dimensional tolerances, which makes assembly of the mirror adjustment unit time-consuming and hence costly.

The object of the invention is to provide a mirror adjustment unit where, while preserving the advantages, the disadvantages mentioned can be counteracted. In particular, the invention contemplates a mirror adjustment unit whereby the electrical connection between a view assist device, in particular a view assist device arranged on the mirror element, can be accomplished in a reliable and efficient manner with a relatively small number of electrical connecting wires from an onboard network of a vehicle to the mirror adjustment unit. Document DE 2627918 discloses a mirror adjustment unit according to the preamble of claim 1.

To this end, the invention provides a mirror adjustment unit for an exterior mirror of a motor vehicle according to claim 1.

By making use, according to the invention, of the already present electrical connectors for the electrically energizable driving devices, an electrical connection belonging to the mirror adjustment unit, in particular an internal one, will suffice for the supply of a view assist device, without necessitating additional electrical connections from the mirror adjustment unit to the onboard network of the vehicle.

In an embodiment of a mirror adjustment unit according to the invention, the third electrical connector comprises spring elements. Such spring elements are particularly suitable for maintaining an electrical connection between a view assist device and a base frame that are rotatable relative to each other during mirror adjustment. It is then advantageous when on the view assist device two contact surfaces are provided against which the spring elements abut. Preferably, the spring elements are implemented as helical springs which provide sufficient compressive stress for providing electrical contact at all times. In an embodiment in which the view assist device and the base frame are not rotatable relative to each other during mirror adjustment, the third electrical connector can contain non-spring, that is, rigid elements.

In an alternative embodiment of a mirror adjustment unit, the third electrical connector comprises a flexible current conductor, in other words, a current conductor which is bendable in a direction transversely to its extension, but does not provide any bias in a direction of its extension. It is then particularly advantageous when the flexible current conductor is implemented as a so-called flex-foil.

In a further embodiment of a mirror adjustment unit according to the invention, in which the electrically energizable view assist device is arranged on a mirror element to be supported by the mirror support, a correct and reliable electrical connection can be realized when the third electrical connector comprises an intermediate connector, arranged on the mirror support, for electrical connection of the electrically energizable view assist device with the onboard network via the intermediate connector, which intermediate connector is electrically connected with the first and second electrical connectors and is electrically connectable with the electrically energizable view assist device arranged on the mirror element.

According to the invention, a compact mirror adjustment unit can be obtained with a reliable electrical connection to the view assist devices when the first electrically energizable driving device comprises a first motor with a first electrically conductive motor casing and/or the second electrically energizable driving device comprises a second motor with a second electrically conductive motor casing, wherein the first and/or second motor casing is electrically connected with the first and second electrical connector, respectively, and wherein the third electrical connector comprises the first and/or second motor casing. By connecting one of the two supply poles of the first and/or second electrical connector with the (metal) motor casing, not only disturbing radiation emission is reduced or obviated, but also, because of the nature of the make-up of the adjusting mechanism, the motor casings, after assembly of the mirror element, extend to a point just below the mirror element, so that a compact construction can be obtained as well.

In an embodiment of a mirror adjustment unit according to the invention, the first and second electrical connectors each include two separate electrical connecting elements, which results in four connecting elements (or supply poles) overall. In an alternative variant of a mirror adjustment unit according to the invention, the first and second electrical connectors each include one separate electrical connecting element and one common connecting element, which results in three connecting elements, with the common connecting element forming the ground. Both types (i.e., three or four connecting elements) are conventionally used in the vehicle technique and require exclusively standard connectors, so that a mirror adjustment unit according to the invention, where connectors are concerned, does not require any modifications. The first and second electrical connectors are preferably included in one common connector housing, such as an exterior mirror connector, so that there is one common connector output which is connectable with a single cable bundle for supplying or energizing the first and second driving devices and the one or more view assist devices.

What is thereby achieved is that the electrical connection can be easily made of multiple design, while preserving the flexibility of the electrical connection.

The invention also relates to an exterior mirror for a motor vehicle, comprising a mirror adjustment unit according to any one of the mirror adjustment unit claims and a mirror element arranged on the mirror support.

In an advantageous embodiment of an exterior mirror according to the invention in which it is possible to supply two different view assist devices with just one third electrical connector, for instance one pair of compression springs, the exterior mirror comprises at least two separate electrically energizable view assist devices, wherein the at least two separate electrically energizable view assist devices are arranged on the adjusting mechanism or are arranged on the mirror element or one electrically energizable view assist device is arranged on the adjusting mechanism and the other view assist device is arranged on the mirror element, wherein the exterior mirror is so constructed that in use with an electrical connection with a first polarity exclusively one of the view assist devices is activated while with an opposite polarity the other of the view assist devices is activated or both view assist devices are activated.

The invention will be further elucidated on the basis of a number of exemplary embodiments which are represented in a drawing. In the drawing:
Fig. 1 shows a schematic view of an exterior mirror mounted on a door of a vehicle;
Fig. 2 shows a schematic top plan view of a mirror adjustment unit for an exterior mirror shown in Fig. 1;
Fig. 3 shows a schematic side view of the mirror adjustment unit of Fig. 2;
Fig. 4 shows a schematic top plan view in perspective of motors and electrical connectors of the mirror adjustment unit of Figs. 2 and 3;
Fig. 5 shows a schematic front view of Fig. 4 with heater pad;
Fig. 6 shows a schematic view in perspective of a part of a crosspiece with, sticking through it, helical springs of the mirror adjustment unit of Figs. 2 to 5;
Fig. 7 shows a schematic top plan view of a heater pad arranged on the mirror adjustment unit; and
Figs. 8 and 9 show examples of electrical circuits to be used in the mirror adjustment unit according to the invention.

The figures are only schematic representations of preferred embodiments of the invention. In the figures, the same or corresponding parts are indicated with the same reference numerals.

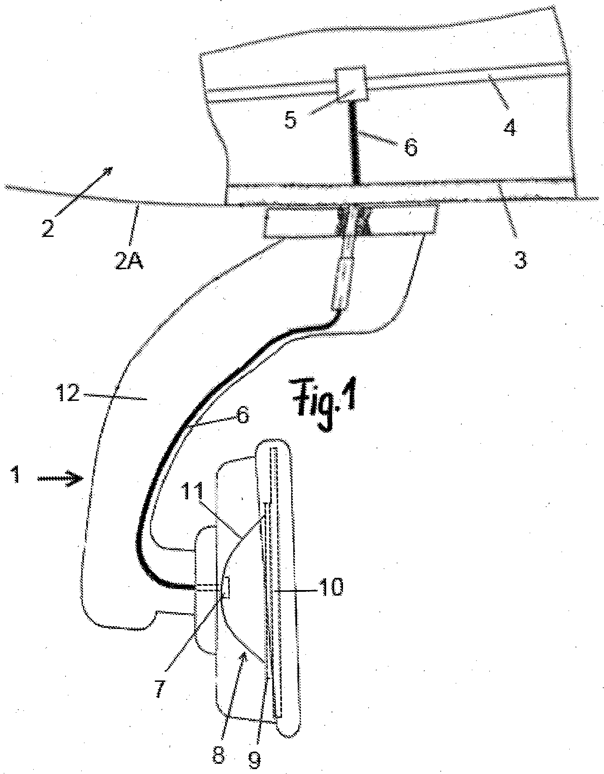

Fig. 1 shows a schematic representation of an exterior mirror 1 of a motor vehicle 2. The exterior mirror 1 in this exemplary embodiment is mounted on the outside 2A of a door 3 of the motor vehicle 2. In the door 3 of the motor vehicle 2 runs a part of the electrical onboard network 4 of the motor vehicle 2, which onboard network 4 advantageously comprises a distribution branch 5 with a control chip for electrically supplying electrically controllable means of the exterior mirror 1 via an exterior mirror feeder cable 6. The exterior mirror feeder cable 6 is connected with an exterior mirror connector 7 of a mirror adjustment unit 8 which comprises a mirror support 9 for supporting a mirror element 10. The mirror adjustment unit 8 further comprises a base frame 11 which can be connected with the motor vehicle 2, in particular by attaching it to a support construction 12 which is pivotably mounted on the door 3 of the motor vehicle 2 in a conventional manner.

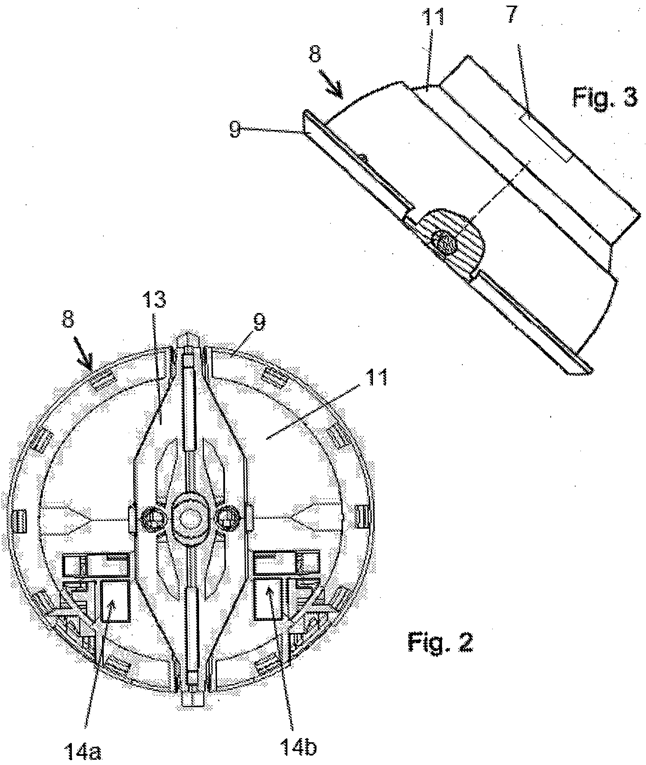

In Fig. 2, schematically, a top plan view is shown of a mirror adjustment unit 8 according to the invention, while in Fig. 3 a schematic side view is shown. It is noted that the mirror support 9 is here represented as a ring-shaped element, but that the invention is not limited thereto. In particular, in embodiments not shown, it is possible that on the mirror support 9 and the crosspiece 13 a support plate can be mounted on which the mirror element is mountable. In general, such a construction of a mirror adjustment unit 8 whereby the mirror support 9 is rotatable relative to the base frame 11 via an adjusting mechanism 14a, 14b, is known, as described, for instance, in EP-A-1347890.

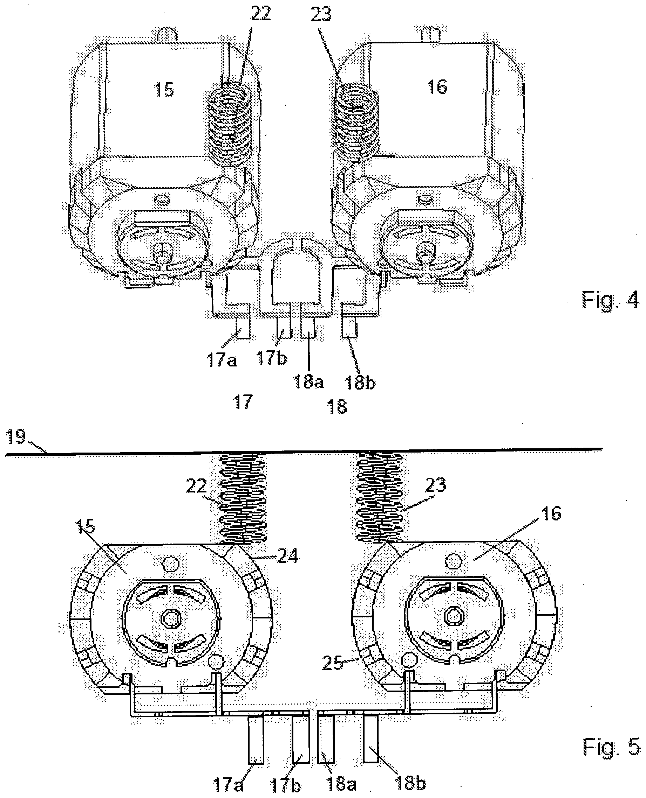

As is represented in Figs. 4 and 5, the adjusting mechanism 14a, 14b is provided with a first electrically energizable driving device, in this case a first motor 15 for rotating the mirror support 9 relative to the base frame 11 with respect to a first axis, and with a second electrically energizable driving device, in this case also a motor 16 for rotating the mirror support 9 relative to the base frame 11 with respect to a second axis, the second axis being at least approximately perpendicular to the first axis.

The first motor 15 is provided with a first electrical connector 17, arranged on the base frame 11, for electrical connection of the first motor 15 with the onboard network 4. Also provided is a second electrical connector 18, arranged on the base frame 11, for electrical connection of the second motor 16 with the onboard network 4. The first and second electrical connectors 17, 18 jointly form the exterior mirror connector 7.

In the embodiment as represented in Figs. 4 and 5, the first and second electrical connectors 17, 18 each include two separate electrical connecting elements or supply poles 17a, 17b; 18a, 18b. In alternative embodiments not shown, the first and second electrical connectors each include one separate electrical connecting element and one common connecting element. For the description of the invention, the starting point will be the embodiment with two supply poles per electrical connector. The invention will further be clarified on the basis of an embodiment in which the electrically energizable view assist device is a heating device 19, also called heater pad, arranged on the mirror element. It will be clear to those skilled in the art that the invention also applies to other view assist devices which, for instance, may also be integrated in the mirror support 9 or the crosspiece 13. In that case, the mirror support, or the crosspiece, forms an intermediate connector which can further, in a manner know per se, be electrically connected with the heater pad, for instance with the aid of a plug connection. In addition, a separate intermediate connector, for instance integrated in the above-mentioned support plate, can be used, which intermediate connector is connected on one side, internally, with the first and second electrical connector 17, 18 and on the other side with the heater pad 19.

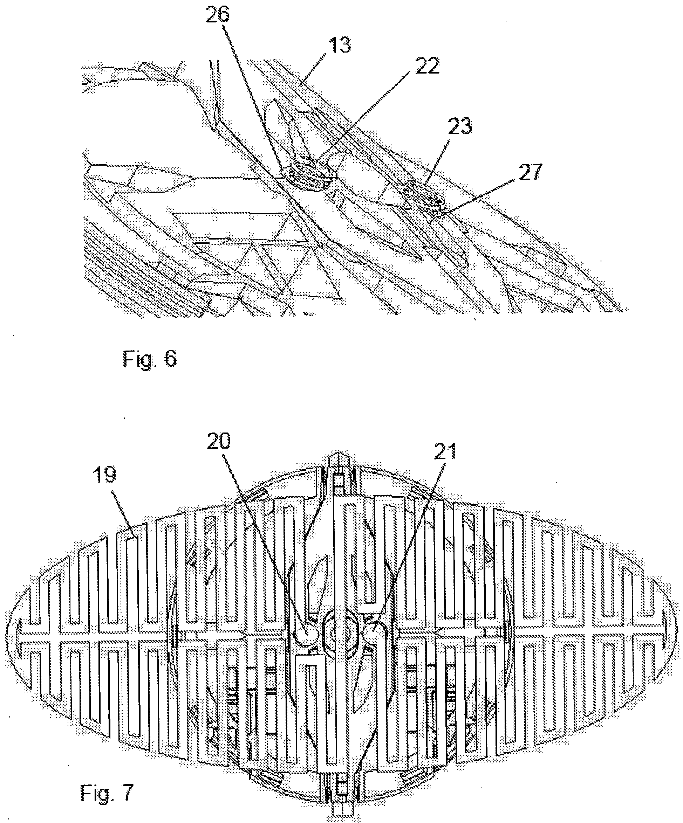

Such a heater pad 19 is shown in Fig. 5 in front view and in Fig. 7 in top plan view and includes contact surfaces 20, 21 for enabling electrical connection with the first and second electrical connectors 17, 18.

This last mentioned electrical connection is realized according to the invention in that the mirror adjustment unit 8 further comprises a third electrical connector for the electrical connection of the heater pad with the onboard network 4, which third electrical connector is placed between the first and second electrical connectors 17, 18 and the heater pad 19 and is electrically connected with the first and second electrical connectors 17, 18. In the embodiment shown, this third electrical connector is formed by spring elements implemented as helical springs 22, 23. The helical spring 22, in any case in use, is in electrical contact with a first electrically conductive motor casing 24 of the first motor 15, which motor casing is electrically connected with the supply pole 17b. Analogously, the helical spring 23, in any case in use, is in electrical contact with a second electrically conductive motor casing 25 of the second motor 16, which motor casing 25 is electrically connected with the supply pole 18b. The third electrical connector hence comprises both the helical springs 22, 23 and the electrically conductive motor casings 24, 25, whereby the helical springs 22, 23, which, as represented in Fig. 6, stick out of openings 26, 27 in the crosspiece 13, provide - after mounting of the mirror element - for a correct electrical connection with the contact surfaces of the heater pad.

In alternative embodiments and/or for the electrical supply of other view assist devices, the third electrical connector can comprise a flexible current conductor, preferably implemented as flex-foil, or even relatively rigid electrical connecting wires.

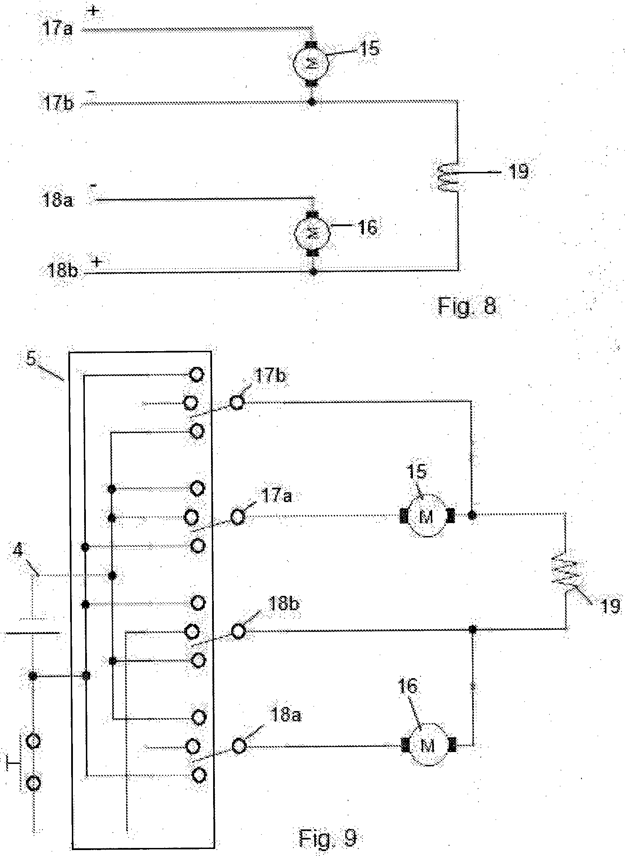

In Figs. 8 and 9 two examples of electrical circuits for the supply of the heater pad 19 are represented, Fig. 9 showing a circuit diagram whereby in one switch setting only the adjusting function of the adjusting mechanism can be activated and in the other switch setting the heater pad can be activated. Such a switching device can be integrated in a simple manner in the distribution branch 5 with control chip so that the driver of the vehicle, at will, can adjust the mirror element or can activate the heater pad.

If the exterior mirror 1 comprises at least two separate electrically energizable view assist devices, for instance a heater pad and a dimming device, then the exterior mirror 1 may be so constructed that, in use, with an electrical connection with first (+/-) or (-/+) polarity exclusively one of the view assist devices is activated, while, with an opposite (-/+) or (+/-) polarity the other of the view assist devices is activated or both view assist devices are activated.

## Claims

1. A mirror adjustment unit for an exterior mirror (1) of a motor vehicle (2), comprising a base frame (11) which is connectable with a motor vehicle (2) and a mirror support (9) for supporting a mirror element (10), which mirror support is connected rotatably relative to the base frame (11) via an adjusting mechanism (14a, 14b), wherein the adjusting mechanism (14a, 14b) is provided with a first electrically energizable driving device (15) for rotating the mirror support (9) relative to the base frame (11) with respect to a first axis, and with a second electrically energizable driving device (16) for rotating the mirror support (9) relative to the base frame (11) with respect to a second axis, wherein the second axis is at least approximately perpendicular to the first axis, wherein the first driving device (15) is provided with a first electrical connector (17) arranged on the base frame (11) for electrical connection of the first driving device (15) with an onboard network (4) of a motor vehicle (2) to which the base frame (11) is connectable, and wherein the second driving device (16) is provided with a second electrical connector (18) arranged on the base frame (11) for electrical connection of the second driving device (16) with the onboard network (4), wherein the mirror adjustment unit (8) further comprises a third electrical connector for electrical connection of an electrically energizable view assist device (19) with the onboard network (4), which electrically energizable view assist device is arranged on the adjusting mechanism (14a, 14b) or is arranged on the mirror element (10) to be supported by the mirror support (9), wherein the third electrical connector is placed between, and electrically connected with, on one side, the first and second electrical connectors (17, 18) and, on the other side, the electrically energizable view assist device (19),
**characterized in that**
the first electrically energizable driving device (15) comprises a first motor with a first electrically conductive motor casing (24) and/or the second electrically energizable driving device (16) comprises a second motor with a second electrically conductive motor casing (26), wherein the first and/or second motor casing (25, 26) is electrically connected with the first and second electrical connector (17, 18), respectively, and wherein the third electrical connector comprises the first and/or second motor casing (25, 26).

2. A mirror adjustment unit according to claim 1, wherein the third electrical connector comprises spring elements (22, 23).

3. A mirror adjustment unit according to claim 2, wherein the spring elements are implemented as helical springs (22, 23).

4. A mirror adjustment unit according to claim 1, wherein the third electrical connector comprises a flexible current conductor.

5. A mirror adjustment unit according to claim 4, wherein the flexible current conductor is implemented as flex-foil.

6. A mirror adjustment unit according to any one of the preceding claims, wherein the electrically energizable view assist device (19) is arranged on a mirror element (10) to be supported by the mirror support (9), and wherein the third electrical connector comprises an intermediate connector arranged on the mirror support for electrical connection of the electrically energizable view assist device (19) with the onboard network (4) via the intermediate connector, which intermediate connector is electrically connected with the first and second electrical connectors (17, 18) and is electrically connectable with the electrically energizable view assist device (19) arranged on the mirror element (10).

7. A mirror adjustment unit according to any one of the preceding claims, wherein the first and second electrical connectors (17, 18) each contain two separate electrical connecting elements (17a, 17b; 18a, 18b).

8. A mirror adjustment unit according to any one of the preceding claims, wherein the first and second electrical connectors (17, 18) each contain one separate electrical connecting element and one common connecting element.

9. An exterior mirror for a motor vehicle comprising a mirror adjustment unit (8) according to any one of the preceding claims and a mirror element (10) arranged on the mirror support (9).

10. An exterior mirror according to claim 9, wherein the exterior mirror (1) comprises at least two separate electrically energizable view assist devices, wherein the at least two separate electrically energizable view assist devices are arranged on the adjusting mechanism (8) or are arranged on the mirror element (10) or one electrically energizable view assist device (19) is arranged on the adjusting mechanism (8) and the other view assist device is arranged on the mirror element (10), wherein the exterior mirror (1) is so constructed that, in use, with an electrical connection with a first polarity exclusively one of the view assist devices is activated, while with an opposite polarity the other of the view assist devices is activated or both view assist devices are activated.

## Patentansprüche

1. Spiegeleinstellungseinheit für einen Außenspiegel (1) eines Kraftfahrzeugs (2), umfassend einen Basisrahmen (11), der mit einem Kraftfahrzeug (2) verbunden werden kann, und einen Spiegelträger (9) zum Stützen eines Spiegelelements (10), welcher Spiegelträger drehbar zu dem Basisrahmen (11) über einen Einstellungsmechanismus (14a, 14b) verbunden ist, wobei der Einstellungsmechanismus (14a, 14b) mit einer ersten elektrisch erregbaren Antriebsvorrichtung (15), um den Spiegelträger (9) zu dem Basisrahmen (11) in Bezug auf eine erste Achse zu drehen, und mit einer zweiten elektrisch erregbaren Antriebsvorrichtung (16), um den Spiegelträger (9) zu dem Basisrahmen (11) in Bezug auf eine zweite Achse zu drehen, versehen ist, wobei die zweite Achse mindestens ungefähr senkrecht zu der ersten Achse ist, wobei die erste Antriebsvorrichtung (15) mit einem elektrischen Anschluss (17) versehen ist, angeordnet auf dem Basisrahmen (11) zur elektrischen Verbindung der ersten Antriebsvorrichtung (15) mit einem Bordnetz (4) eines Kraftfahrzeugs (2), mit dem der Basisrahmen (11) verbunden werden kann, und wobei die zweite Antriebsvorrichtung (16) mit einem zweiten elektrischen Anschluss (18) versehen ist, angeordnet auf dem Basisrahmen (11) zur elektrischen Verbindung der zweiten Antriebsvorrichtung (16) mit dem Bordnetz (4), wobei die Spiegeleinstellungseinheit (8) ferner einen dritten elektrischen Anschluss umfasst, um eine elektrisch erregbare Sichthilfevorrichtung (19) mit dem Bordnetz (4) zu verbinden, welche elektrisch erregbare Sichthilfevorrichtung auf dem Einstellungsmechanismus (14a, 14b) angeordnet ist oder auf dem Spiegelelement angeordnet ist, um von dem Spiegelträger (9) gestützt zu werden, wobei der dritte elektrische Anschluss platziert ist zwischen und elektrisch verbunden ist mit auf einer Seite zwischen dem ersten und zweiten elektrischen Anschluss (17, 18) und auf der anderen Seite der elektrisch erregbaren Sichthilfevorrichtung (19),
**dadurch gekennzeichnet, dass**
die erste elektrisch erregbare Vorrichtung (15) einen ersten Motor mit einem ersten elektrisch leitenden Motorgehäuse (24) und/oder die zweite elektrisch erregbare Antriebsvorrichtung (16) einen zweiten Motor mit einem zweiten elektrisch leitenden Motorgehäuse (26) umfasst, wobei das erste und/oder zweite Motorgehäuse (25, 26) elektrisch mit dem ersten bzw. zweiten elektrischen Anschluss (17, 18) verbunden ist und wobei der dritte elektrische Anschluss das erste und/oder zweite Motorgehäuse (25, 26) umfasst.

2. Spiegeleinstellungseinheit nach Anspruch 1, wobei der elektrische Anschluss Federelemente (22, 23) umfasst.

3. Spiegeleinstellungseinheit nach Anspruch 2, wobei die Federelemente als Spiralfedern (22, 23) implementiert sind.

4. Spiegeleinstellungseinheit nach Anspruch 1, wobei der dritte elektrische Anschluss einen flexiblen Stromleiter umfasst.

5. Spiegeleinstellungseinheit nach Anspruch 4, wobei der flexible Stromleiter als Flexfolie implementiert ist.

6. Spiegeleinstellungseinheit nach einem der vorhergehenden Ansprüche, wobei die elektrisch erregbare Sichthilfevorrichtung (19) auf einem Spiegelelement (10) angeordnet ist, um von dem Spiegelträger (9) gestützt zu werden, und wobei der dritte elektrische Anschluss einen Zwischenanschluss umfasst, angeordnet auf dem Spiegelträger zur elektrischen Verbindung der elektrisch erregbaren Sichthilfevorrichtung (19) mit dem Bordnetz (4) über den Zwischenanschluss, welcher Zwischenanschluss elektrisch mit den ersten und zweiten elektrischen Anschlüssen (17, 18) verbunden ist und elektrisch mit der elektrisch erregbaren Sichthilfevorrichtung (19), angeordnet auf dem Spiegelelement (10), verbunden werden kann.

7. Spiegeleinstellungseinheit nach einem der vorhergehenden Ansprüche, wobei die ersten und zweiten elektrischen Anschlüsse (17, 18) jeweils zwei separate elektrische Verbindungselemente (17a, 17b; 18a, 18b) umfassen.

8. Spiegeleinstellungseinheit nach einem der vorhergehenden Ansprüche, wobei die ersten und zweiten elektrischen Anschlüsse (17, 18) jeweils ein separates elektrisches Verbindungselement und ein gemeinsames Verbindungselement umfassen.

9. Außenspiegel für ein Kraftfahrzeug, umfassend eine Spiegeleinstellungseinheit (8) nach einem der vorhergehenden Ansprüche und ein Spiegelelement (10), angeordnet auf dem Spiegelträger (9).

10. Außenspiegel nach Anspruch 9, wobei der Außenspiegel (1) mindestens zwei separate elektrisch erregbare Sichthilfevorrichtungen umfasst, wobei die mindestens zwei separaten elektrisch erregbaren Sichthilfevorrichtungen auf dem Einstellungsmechanismus (8) angeordnet sind oder auf dem Spiegelelement (10) angeordnet sind oder eine elektrisch erregbare Sichthilfevorrichtung (19) auf dem Einstellungsmechanismus (8) angeordnet ist und die andere Sichthilfevorrichtung auf dem Spiegelelement (10) angeordnet ist, wobei der Außenspiegel (1) so konstruiert ist, dass, bei Verwendung mit einem elektrischen Anschluss mit einer ersten Polarität ausschließlich eine der Sichthilfevorrichtungen aktiviert wird, während mit einer entgegengesetzten Polarität die andere der Sichthilfevorrichtungen aktiviert wird oder beide Sichthilfevorrichtungen aktiviert werden.

## Revendications

1. Unité de réglage de rétroviseur destinée à un rétroviseur extérieur (1) d'un véhicule (2) à moteur, comprenant un cadre de base (11) qui peut être relié à un véhicule (2) à moteur et un support (9) de rétroviseur destiné à supporter un élément de rétroviseur (10), ledit support de rétroviseur est relié de manière rotative par rapport au cadre de base (11) par l'intermédiaire d'un mécanisme de réglage (14a, 14b), dans laquelle le mécanisme de réglage (14a, 14b) est pourvu d'un premier dispositif d'entraînement pouvant être électriquement mis sous tension (15) destiné à faire tourner le support (9) de rétroviseur par rapport au cadre de base (11) selon un premier axe, et d'un deuxième dispositif d'entraînement pouvant être électriquement mis sous tension (16) destiné à faire tourner le support (9) de rétroviseur par rapport au cadre de base (11) selon un deuxième axe, dans laquelle le deuxième axe est au moins approximativement perpendiculaire au premier axe, dans laquelle le premier dispositif d'entraînement (15) est pourvu d'un premier connecteur électrique (17) agencé sur le cadre de base (11) pour la connexion électrique du premier dispositif d'entraînement (15) avec un réseau de bord (4) d'un véhicule (2) à moteur auquel le cadre de base (11) peut être connecté, et dans laquelle le deuxième dispositif d'entraînement (16) est pourvu d'un deuxième connecteur électrique (18) agencé sur le cadre de base (11) pour la connexion électrique du deuxième dispositif d'entraînement (16) avec le réseau embarqué (4), dans laquelle l'unité de réglage de rétroviseur (8) comprend en outre un troisième connecteur électrique pour la connexion électrique d'un dispositif d'aide à la vision pouvant être électriquement mis sous tension (19) avec le réseau embarqué (4), ledit dispositif d'aide à la vision pouvant être électriquement mis sous tension est agencé sur le mécanisme de réglage (14a, 14b) ou est agencé sur l'élément de rétroviseur (10) à supporter par le support (9) de rétroviseur, dans laquelle le troisième connecteur électrique est placé entre, et électriquement connecté aux, sur un premier côté, premier et deuxième connecteurs électriques (17, 18) et, sur l'autre côté, au dispositif d'aide à la vision pouvant être électriquement mis sous tension (19),
**caractérisée en ce que**
le premier dispositif d'entraînement pouvant être électriquement mis sous tension (15) comprend un premier moteur pourvu d'un premier carter électroconducteur de moteur (24) et/ou le deuxième dispositif d'entraînement pouvant être électriquement mis sous tension (16) comprend un deuxième moteur pourvu d'un deuxième carter électroconducteur de moteur (26),
dans laquelle les premier et/ou deuxième carters (25, 26) de moteur sont électriquement connectés aux premier et deuxième connecteurs électriques (17, 18), respectivement, et dans laquelle le troisième connecteur électrique comprend les premier et/ou deuxième carters (25, 26) de moteur.

2. Unité de réglage de rétroviseur selon la revendication 1, dans laquelle le troisième connecteur électrique comprend des éléments ressorts (22, 23).

3. Unité de réglage de rétroviseur selon la revendication 2, dans laquelle les éléments ressorts sont mis en oeuvre sous la forme de ressorts hélicoïdaux (22, 23).

4. Unité de réglage de rétroviseur selon la revendication 1, dans laquelle le troisième connecteur électrique comprend un conducteur de courant flexible.

5. Unité de réglage de rétroviseur selon la revendication 4, dans laquelle le conducteur de courant flexible est mis en oeuvre sous la forme d'une feuille flexible.

6. Unité de réglage de rétroviseur selon l'une quelconque des revendications précédentes, dans laquelle le dispositif d'aide à la vision pouvant être électriquement mis sous tension (19) est agencé sur un élément de rétroviseur (10) à supporter par le support (9) de rétroviseur, et dans laquelle le troisième connecteur électrique comprend un connecteur intermédiaire agencé sur le support de rétroviseur pour la connexion électrique du dispositif d'aide à la vision pouvant être électriquement mis sous tension (19) avec le réseau embarqué (4) par le biais du connecteur intermédiaire, ledit connecteur intermédiaire est électriquement connecté aux premier et deuxième connecteurs électriques (17, 18) et peut être électriquement connecté au dispositif d'aide à la vision pouvant être électriquement mis sous tension (19) agencé sur l'élément de rétroviseur (10).

7. Unité de réglage de rétroviseur selon l'une quelconque des revendications précédentes, dans laquelle les premier et deuxième connecteurs électriques (17, 18) contiennent chacun deux éléments de connexion électrique séparés (17a, 17b ; 18a, 18b).

8. Unité de réglage de rétroviseur selon l'une quelconque des revendications précédentes, dans laquelle les premier et deuxième connecteurs électriques (17, 18) contiennent chacun un élément de connexion électrique séparé et un élément de connexion commun.

9. Rétroviseur extérieur pour un véhicule à moteur comprenant une unité de réglage de rétroviseur (8) selon l'une quelconque des revendications précédentes et un élément de rétroviseur (10) agencé sur le support (9) de rétroviseur.

10. Rétroviseur extérieur selon la revendication 9, dans lequel le rétroviseur extérieur (1) comprend au moins deux dispositifs séparés d'aide à la vision pouvant être électriquement mis sous tension, dans lequel les au moins deux dispositifs séparés d'aide à la vision pouvant être électriquement mis sous tension sont agencés sur le mécanisme de réglage (8) ou sont agencés sur l'élément de rétroviseur (10) ou un dispositif d'aide à la vision pouvant être électriquement mis sous tension (19) est agencé sur le mécanisme de réglage (8) et l'autre dispositif d'aide à la vision est agencé sur l'élément de rétroviseur (10), dans lequel le rétroviseur extérieur (1) est construit de telle sorte que, lors de l'utilisation, avec une connexion électrique avec une première polarité l'un exclusivement des dispositifs d'aide à la vision est activé, alors qu'avec une polarité opposée l'autre des dispositifs d'aide à la vision est activé ou les deux dispositifs d'aide à la vision sont activés.
